(19) Europäisches Patentamt
European Patent Office
Office européen des brevets

(11) Veröffentlichungsnummer: **0 152 006**
**B1**

# (12) EUROPÄISCHE PATENTSCHRIFT

(45) Veröffentlichungstag der Patentschrift: **08.02.89**

(51) Int. Cl.⁴: **A 01 N 25/32**

(21) Anmeldenummer: **85100866.4**

(22) Anmeldetag: **29.01.85**

(54) **Verwendung von Chinolyloxy-Verbindungen als Antidots für Fenoxapropethyl (Ethyl-2[4-(6-chlorbenzoxazolyloxy)-phenoxy]-propionat).**

(30) Priorität: **08.02.84 DE 3404401**

(43) Veröffentlichungstag der Anmeldung: **21.08.85 Patentblatt 85/34**

(45) Bekanntmachung des Hinweises auf die Patenterteilung: **08.02.89 Patentblatt 89/6**

(84) Benannte Vertragsstaaten: **AT BE DE FR GB IT NL SE**

(56) Entgegenhaltungen:
**EP-A- 0 094 349**
**DE-A- 2 546 845**

(73) Patentinhaber: **HOECHST AKTIENGESELLSCHAFT, Postfach 80 03 20, D-6230 Frankfurt am Main 80 (DE)**

(72) Erfinder: **Handte, Reinhard, Dr., Theilweg 23, D-8901 Gablingen (DE)**
Erfinder: **Mildenberger, Hilmar, Dr., Fasanenstrasse 24, D-6233 Kelkheim (Taunus) (DE)**
Erfinder: **Bauer, Klaus, Dr., Kolpingstrasse 7, D-6054 Rodgau (DE)**
Erfinder: **Bieringer, Hermann, Dr., Eichenweg 26, D-6239 Eppstein/Taunus (DE)**

**EP 0 152 006 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Aus EP-A-94 349 ist bereits bekannt, dass u.a. Chinolinoxyalkancarbonsäurederivate zum Schützen von Kulturpflanzen gegen schädigende Nebenwirkungen von Agrarchemikalien, insbesondere Herbiziden, verwendet werden können.

Es wurde nun gefunden, dass die genannten Verbindungen hervorragend geeignet sind, um das Anwendungsspektrum von Fenoxaprop-ethyl (Ethyl-2[4-(6-chlorbenzoxazolyloxy)-phenoxy]-propionat) zu erweitern.

Gegenstand der vorliegenden Erfindung ist daher die Verwendung von Chinolyloxyverbindungen der Formel

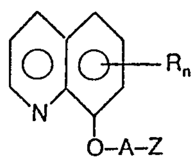

I

worin

A = $-CH_2-$ oder $-CH(CH_3)-$,

R = Halogen, insbesondere Chlor,

Z = $COOR_1$ oder $COSR_2$,

$R^1$ = H, $(C_1-C_8)$-Alkyl, das durch Halogen oder $(C_1-C_4)$-Alkoxy substituiert sein kann; $(C_3-C_6)$-Alkenyl, $(C_3-C_6)$-Alkinyl oder ein Kationäquivalent einer anorganischen oder organischen Base;

$R^2$ = $(C_1-C_4)$-Alkyl und

n = eine Zahl von null bis zwei

bedeuten, als Safener für das Herbizid Ethyl-2[4-(6-chlorbenzoxazolyloxy)-phenoxy]-propionat(II).

Unter «Kationäquivalenten» sind im Vorstehenden insbesondere Alkali- oder Erdalkali-ionen sowie gegebenenfalls durch niederes Alkyl und Hydroxyalkyl ein- bis dreifach substituiertes Ammonium zu verstehen.

Die Verbindungen der Formel I sind grossenteils bekannt oder lassen sich nach allgemein bekannten Verfahren herstellen (vgl. EP-A-94 349).

In der nachfolgenden Tabelle sind beispielhaft eine Reihe von Verbindungen der Formel I aufgeführt:

Tabelle

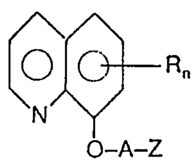

| Beispiel | $(R)_n$ | A | Z | Fp(°C) |
|---|---|---|---|---|
| 1 | H | $CH_2$ | COOH | 232 |
| 2 | 5-Cl | $CH_2$ | COOH | 104-5 |
| 3 | 5-Cl | $CH_2$ | $COOCH_3$ | 63-6 |
| 4 | 5-Cl | $CH_2$ | $COOC_4H_9$ (tert.) | 97-8 |
| 5 | 5-Cl | $CH_2$ | $COOC_2H_4OCH_3$ | 87-8 |
| 6 | 5-Cl | $CH_2$ | $COOC_8H_{17}$(n) | 98-9 |
| 7 | 5-Cl | $CH_2$ | $COOCH_2CH=CH_2$ | |
| 8 | 5,7-Di-Cl | $CH_2$ | COOH | |
| 9 | 5,7-Di-Cl | $CH_2$ | $COOC_2H_5$ | |
| 10 | 5,7-Di-Cl | $CH_2$ | $COOC_6H_{13}$ | |
| 11 | 5,7-Di-Cl | $CH_2$ | $COOCH_2-CH_2-OCH_3$ | |
| 12 | 5,7-Di-Cl | $CH_2$ | $COOCH_2-C\equiv CH$ | |
| 13 | 5,7-Di-Cl | $CH_2$ | $COOCH_2-CH_2-CH_2-Cl$ | |
| 14 | 5,7-Di-Cl | $CH_2$ | $COOCH_3$ | 65 |
| 15 | 5,7-Di-Cl | $CH_2$ | COONa | |
| 16 | 5,7-Di-Cl | $CH_2$ | COOK | |
| 17 | 5,7-Di-Cl | $CH_2$ | $COSC_2H_5$ | |
| 18 | H | $CH_2$ | $COOCH_3$ | 70 |
| 19 | H | $CH_2$ | $COOC_4H_9$(n) | |
| 20 | 5-Cl | $CH_2$ | $COOCH_2C\equiv CH$ | 115-6 |
| 21 | 5-Cl | $CH_2$ | $COOCH_2CH_2CH_2Cl$ | |
| 22 | 5-Cl | $CH(CH_3)$ | COOH | |
| 23 | 5-Cl | $CH(CH_3)$ | $COOCH_3$ | |
| 24 | 5-Cl | $CH(CH_3)$ | $COOC_4H_9$(n) | |
| 25 | 5-Cl | $CH(CH_3)$ | $COOC_2H_5$ | |
| 26 | 5,7-Di-Cl | $CH(CH_3)$ | COOH | |
| 27 | 5,7-Di-Cl | $CH(CH_3)$ | $COOC_3H_7$(i) | |
| 28 | 5,7-Di-Cl | $CH(CH_3)$ | $COONH_4$ | |
| 29 | 5,7-Di-Cl | $CH(CH_3)$ | $COONH(C_2H_5)_3$ | |

Die Verbindungen der allgemeinen Formel I zeichnen sich dadurch aus, dass sie in niedrigen, d.h. subtoxischen Konzentrationen in Verbindung mit Fenoxaprop-ethyl(II) ausgebracht werden und dann in der Lage sind, schädliche Nebenwirkungen desselben zu antagonisieren, d.h. völlig aufzuheben, ohne seine herbizide Wirksamkeit zu beeinträchtigen.

Hierdurch kann das Einsatzgebiet des Mittels erheblich vergrössert werden. Gegenstand der vorliegenden Erfindung ist daher auch ein Verfahren zum Schutz von Kulturpflanzen gegen phytotoxische Nebenwirkungen von II, das dadurch gekennzeichnet ist, dass man die Pflanzen, Pflanzenteile oder Pflanzennährböden mit einer Verbindung der Formel I vor, nach oder gleichzeitig mit II behandelt.

II wird vor allem zur Bekämpfung von grasartigen Schadpflanzen in dikotylen Kulturen, z.B. Soja und Kartoffeln, angewendet. In monokotylen Kulturen wie z.B. Getreide, Reis und Mais ist Fenoxaprop-ethyl jedoch nur beschränkt einsetzbar.

Durch die erfindungsgemässe Kombination mit einem Safener der Formel I lässt sich das Herbizid auch in monokotylen Kulturpflanzen, insbesondere Getreidearten wie Weizen, Gerste, Reis und Sorghum, als selektives Ungrasmittel verwenden.

Das Mengenverhältnis Antidot: Herbizid kann innerhalb weiter Grenzen zwischen 0,1 und 5 Teilen Antidot auf 1 Teil Herbizid schwanken. Das optimale Mengenverhältnis ist abhängig vom Antidot sowie von der Art der zu behandelnden Pflanzenkultur. Vorzugsweise verwendet man Antidot und Herbizid im Verhältnis (0,2–2):1.

Die Safener können je nach ihren Eigenschaften zur Vorbehandlung des Saatgutes der Kulturpflanze (Beizung der Samen) verwendet oder vor der Saat in die Saatfruchten eingebracht werden oder zusammen mit dem Herbizid vor oder nach dem Auflaufen der Pflanzen angewendet werden. Vorauflaufbehandlung schliesst sowohl die Behandlung der Anbaufläche vor der Aussaat als auch die Behandlung der angesäten, aber noch nicht bewachsenen Anbauflächen ein.

Grundsätzlich kann das Antidot vor, nach oder gleichzeitig mit dem Herbizid angewendet werden, bevorzugt ist jedoch die gleichzeitige Anwendung in Form von Tankmischungen oder Fertigformulierungen.

Für die Anwendung können die Verbindungen der Formel I mit üblichen Formulierungshilfen zu Stäubemitteln, Spritzpulvern, Dispersionen, Emulsionskonzentraten, Granulaten oder Mikrogranulaten zubereitet werden, die den Wirkstoff in Konzentration von 2–80% enthalten und entweder als solche angewendet werden (Stäubemittel, Pellets) oder vor der Anwendung in einem Lösungsmittel (Wasser) gelöst oder dispergiert werden.

Spritzpulver sind in Wasser gleichmässig dispergierbare Präparate, die neben dem Wirkstoff ausser gegebenenfalls einem Verdünnungs- oder Inertstoff noch Netzmittel, z.B. polyoxethylierte Alkylphenole, polyoxethylierte Fettalkohole, Alkyl- oder Alkylphenylsulfonate und Dispergiermittel, z.B. ligninsulfonsaures Natrium, 2,2'-dinaphthylmethan-6,6'-disulfonsaures Natrium, dibutylnaphthalinsulfonsaures Natrium oder auch oleoylmethyltaurinsaures Natrium enthalten. Die Herstellung erfolgt in üblicher Weise, z.B. durch Mahlen und Vermischen der Komponenten.

Emulgierbare Konzentrate können z.B. durch Auflösen des Wirkstoffes in einem inerten organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt werden. Bei flüssigen Wirkstoffen kann der Lösungsmittelanteil auch ganz oder teilweise entfallen. Als Emulgatoren können beispielsweise verwendet werden: Alkyl-arylsulfonsaure Calciumsalze wie Ca-dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Fettalkohol-Propylenoxid-Ethylenoxid-Kondensationsprodukte, Alkylpolyglykolether, Sorbitanfettsäureester, Polyoxethylensorbitanfettsäureester oder Polyoxyethylensorbitester.

Stäubemittel kann man durch Vermahlen des Wirkstoffes mit fein verteilten, festen Stoffen, z.B. Talkum, natürlichen Tonen wie Kaolin, Bentonit, Pyrophillit oder Diatomeenerde erhalten.

Granulate können entweder durch Verdüsen des Wirkstoffes auf adsorptionsfähiges, granuliertes Inertmaterial hergestellt werden oder durch Aufbringen von Wirkstoffkonzentrationen mittels Bindemitteln, z.B. Polyvinylalkohol, polyacrylsaurem Natrium oder auch Mineralölen auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise, gewünschtenfalls in Mischung mit Düngemitteln, granuliert werden.

In Spritzpulvern beträgt die Wirkstoffkonzentration z.B. etwa 10 bis 90 Gew.-%, der Rest zu 100 Gew.-% besteht aus üblichen Formulierungsbestandteilen. Bei emulgierbaren Konzentraten kann die Wirkstoffkonzentration etwa 10 bis 80 Gew.-% betragen. Staubförmige Formulierungen enthalten meistens 5 bis 20 Gew.-% an Wirkstoff, versprühbare Lösungen etwa 2 bis 20 Gew.-%. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden.

Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Konzentrate gegebenenfalls in üblicher Weise verdünnt, z.B. bei Spritzpulvern, emulgierbaren Konzentraten, Dispersionen und teilweise auch bei Mikrogranulaten mittels Wasser. Staubförmige und granulierte Zubereitungen sowie versprühbare Lösungen werden vor der Anwendung üblicherweise nicht mehr mit weiteren inerten Stoffen verdünnt.

A. Formulierungsbeispiele

a. Ein Stäubemittel wird erhalten, indem man 10 Gew.-Teile Safener und 90 Gewichtsteile Talkum oder Inertstoff mischt und in einer Schlagmühle zerkleinert.

b. Ein in Wasser leicht dispergierbares, benetzbares Pulver wird erhalten, indem man 25 Gewichtsteile Safener, 64 Gewichtsteile kaolinhaltigen Quarz als Inertstoff, 10 Gewichtsteile ligninsulfonsaures Kalium und 1 Gewichtsteil oleoylmethyltaurinsaures Natrium als Netz- und Dispergiermittel mischt und in einer Stiftmühle mahlt.

c. Ein in Wasser leicht dispergierbares Dispersionskonzentrat wird erhalten, indem man 20 Gewichtsteile Safener mit 6 Gewichtsteilen Alkylphenolpolyglykolether (Triton® X 207), 3 Gewichtsteilen Isotridecanolpolyglykolether (8 AeO) und 71 Gewichtsteilen paraffinischem Mineralöl (Siedebereich z.B. ca. 255 bis über 377 °C) mischt und in einer Reibkugelmühle auf eine Feinheit von unter 5 Mikron vermahlt.

d. Ein emulgierbares Konzentrat wird erhalten aus 15 Gewichtsteilen Safener, 75 Gewichtsteilen Cyclohexanon als Lösungsmittel und 10 Gewichtsteilen oxethyliertes Nonylphenol als Emulgator.

B. Biologische Beispiele

Beispiel 1

Weizen, Gerste und 2 wichtige Schadgräser (Avena fatua und Alopecurus myosuroides) wurden ausgesät und unter Gewächshausbedingungen bis zum 4-Blattstadium angezogen. Sodann wurden erfindungsgemässe Safener und Fenoxaprop-ethyl(II) in verschiedenen Dosierungen auf die Versuchspflanzen gesprüht. Nach 4 weiteren Wochen Standzeit im Gewächshaus wurden die Pflanzen auf jede Art von Hemmung oder Schädigung im Vergleich zu nicht mit Safenern behandelten Versuchspflanzen untersucht. Die Ergebnisse zeigen, dass die Safener die herbiziden Schadwirkungen an Weizen und Gerste sehr stark reduzieren bzw. vollständig ausschalten, ohne die herbizide Wirksamkeit gegen die Schadgräser Avena und Alopecurus zu beeinträchtigen.

Safenerwirkung der Chinolin-Derivate in verschiedenen Getreidekulturen:

| Produkt | Dosis kg a.i./ha | herbizide Wirkung in % TA | TD | HV | ALM | AVF |
|---|---|---|---|---|---|---|
| Fenoxaprop-ethyl (II) | 0,8 | 20 | 98 | 95 | – | – |
| | 0,4 | 10 | 94 | 87 | 98 | 96 |
| | 0,2 | 5 | 85 | 81 | 93 | 86 |
| | 0,1 | 0 | 57 | 43 | 87 | 42 |
| II+Verb. 18 | 0,8+0,2 | 2 | 0 | 67 | – | – |
| | 0,4+0,1 | 0 | 0 | 52 | 99 | 95 |
| | 0,2+0,05 | 0 | 0 | 51 | 90 | 87 |
| | 0,1+0,025 | 0 | 0 | 32 | 83 | 51 |
| II×Verb. 3 | 0,8+0,4 | 0 | 0 | 5 | – | – |
| | 0,8+0,2 | 0 | 0 | 15 | – | – |
| | 0,4+0,2 | 0 | 0 | 0 | 100 | 98 |
| | 0,4+0,1 | 0 | 0 | 2 | 98 | 96 |
| | 0,2+0,1 | 0 | 0 | 0 | 92 | 89 |
| | 0,2+0,05 | 0 | 0 | 0 | 90 | 91 |
| | 0,1+0,05 | 0 | 0 | 0 | 85 | 56 |
| | 0,1+0,025 | 0 | 0 | 0 | 80 | 30 |
| II+Verb. 14 | 0,8+0,2 | 0 | 60 | 69 | – | – |
| | 0,4+0,1 | 0 | 57 | 67 | 99 | 96 |
| | 0,2+0,05 | 0 | 52 | 53 | 95 | 93 |
| | 0,1+0,025 | 0 | 25 | 22 | 86 | 57 |
| II+Verb. 1 | 0,8+0,2 | 0 | | | – | – |
| | 0,4+0,1 | 0 | | | 96 | 94 |
| | 0,2+0,05 | 0 | | | 93 | 88 |
| | 0,1+0,025 | 0 | | | 60 | 40 |
| II+Verb. 2 | 0,8+0,2 | 0 | 10 | 15 | – | – |
| | 0,4+0,1 | 0 | 0 | 10 | 98 | 96 |
| | 0,2+0,05 | 0 | 0 | 10 | 87 | 85 |
| | 0,1+0,025 | 0 | 0 | 0 | 77 | 47 |

Abkürzungen:

TA = Triticum aestivum
TD = Triticum durum
HV = Hordeum vulgare
ALM = Alopecurus myosuroides
AVF = Avena fatua

**Patentansprüche**

1. Verfahren zum Schutz von Kulturpflanzen gegen phytotoxische Nebenwirkungen von Ethyl-2[4-(6-chlorbenzoxazolyloxy)-phenoxy]-propionat(II),
dadurch gekennzeichnet, dass man eine Verbindung der Formel I

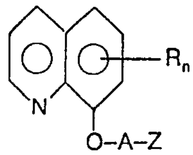

I

worin
A = $-CH_2-$, oder $-CH(CH_3)-$,
R = Halogen, insbesondere Chlor,
Z = $COOR_1$ oder $COSR_2$,
$R^1$ = H, $(C_1-C_8)$-Alkyl, das durch Halogen oder $(C_1-C_4)$-Alkoxy substituiert sein kann; $(C_3-C_6)$-Alkenyl, $(C_3-C_6)$-Alkinyl oder ein Kationäquivalent einer anorganischen oder organischen Base;
$R^2$ = $(C_1-C_4)$-Alkyl und
n = eine Zahl von null bis zwei
bedeuten,
vor, nach oder gleichzeitig mit II auf die zu behandelnden Pflanzen, Pflanzenteile oder Pflanzennährböden aufbringt.

2. Verfahren nach Anspruch 1 zum Schützen von Weizen, Gerste, Reis und Sorghum.

3. Verwendung von Verbindungen der Formel I gemäss Anspruch 1 als Safener für II.

4. Verwendung von Verbindungen der Formel I gemäss Anspruch 1 als Safener für II in Getreide, Reis, Mais und Sorghum.

5. Mittel zur Bekämpfung von grasartigen Unkräutern in Nutzpflanzenkulturen, gekennzeichnet durch einen Gehalt an
a) einer Verbindung der Formel I gemäss Anspruch 1, und
b) der Verbindung II.

6. Mittel gemäss Anspruch 5, dadurch gekennzeichnet, dass das Mengenverhältnis der Verbindungen I und II 0,1:1 bis 5:1 beträgt.

7. Mittel gemäss Anspruch 5, dadurch gekennzeichnet, dass die Nutzpflanzenkultur Weizen, Gerste, Reis oder Sorghum ist.

**Claims**

1. A process for the protection of crop plants against the phytotoxic side effects of ethyl 2-[4-(6-chlorobenzoxazolyloxy)-phenoxy]-propionate(II),
which comprises applying a compound of the formula I

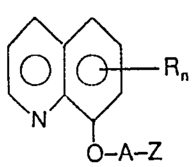

I

wherein
A denotes $-CH_2-$ or $-CH(CH_3)-$,
R denotes halogen, in particular chlorine,
Z denotes $COOR_1$ or $COSR_2$,
$R^1$ denotes H or $(C_1-C_8)$-alkyl which can be substituted by halogen or $(C_1-C_4)$-alkoxy; $(C_3-C_6)$-alkenyl, $(C_3-C_6)$-alkinyl or a cation equivalent of an inorganic or organic base;
$R^2$ denotes $(C_1-C_4)$-alkyl and
n denotes a number from zero to two,
before, after or simultaneously with II to the plants, parts of plants or fertile soils for plants which are to be treated.

2. The process according to claim 1 for the protection of wheat, barley, rice and sorghum.

3. The use of compounds of the formula I according to claim 1 as safeners for II.

4. The use of compounds of the formula I according to claim 1 as safeners for II in cereals, rice, maize and sorghum.

5. An agent for combating grasslike weeds in crops of useful plants, which contains
a) a compound of the formula I according to claim 1, and
b) the compound II.

6. An agent according to claim 5, wherein the ratio of the compounds I and II is 0.1:1 to 5:1.

7. An agent according to claim 5, wherein the crop of useful plants is wheat, barley, rice or sorghum.

**Revendications**

1. Procédé pour protéger des plantes de culture contre les effets secondaires phytotoxiques du 2-[4-(6-chlorobenzoxazolyloxy)-phénoxy]-propionate d'éthyle (composé II), procédé caractérisé en ce que, en même temps que le composé II, ou bien avant ou après, on applique sur les plantes à traiter ou sur des parties de celles-ci, ou encore sur leur terrain de culture, un composé de formule I ci-dessous:

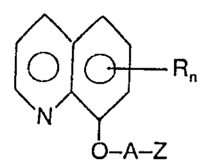

I

dans laquelle
A représente le groupe $-CH_2-$ ou $-CH(CH_3)-$,
R un halogène, en particulier le chlore,
Z un groupe $COOR_1$ ou $COSR_2$,
$R^1$ étant l'hydrogène, un alkyle en $C_1-C_8$ pouvant porter un halogène ou un alcoxy en $C_1-C_4$, un alcényle en $C_3-C_6$ ou un alcynyle en $C_3-C_6$ ou encore un équivalent de cation d'une base minérale ou organique, et
$R^2$ un alkyle en $C_1-C_4$, et
n est un nombre de 0 à 2.

2. Procédé selon la revendication pour la protection de blé, d'orge, de riz et de sorgho.

3. Utilisation des composés de formule I selon la revendication 1 comme antidotes contre le composé II.

4. Utilisation des composés de formule I selon la revendication 1 comme antidotes contre le composé II dans des cultures de céréales, riz, maïs et sorgho.

5. Produit de lutte contre des mauvaises herbes graminées dans des cultures de plantes utiles, produit caractérisé en ce qu'il contient:

a) un composé de formule I selon la revendication 1 et

b) le composé II.

6. Produit selon la revendication 5 dans lequel le rapport du composé I au composé II est compris entre 0,1 et 5.

7. Produit selon la revendication 5 employé dans les cultures de blé, orge, riz ou sorgho.